# FASCICULE DE BREVET EUROPEEN

(11) **EP 1 950 383 B1**
(45) Date de publication et mention de la délivrance du brevet: **06.06.2012**
(21) Numéro de dépôt: 08100729.6
(22) Date de dépôt: 22.01.2008
(51) Int. Cl.: F01D 5/16, F02K 3/06, F01D 9/06, F01D 5/14

(54) **Redresseur acoustique pour carter de soufflante de turboréacteur**
Maßnahmen zum Lärmschutz am Gehäuse eines Bläser-Triebwerks
Noise attenuation features for the casing of a turbo fan engine

(30) Priorité: 25.01.2007 FR 0700524
(43) Date de publication de la demande: 30.07.2008
(73) Titulaire: SNECMA, 75015 Paris (FR)
(72) Inventeur: Julliard, Jacques, 77850, HERCY (FR); Molinari, Olivier, 77210, AVON (FR); Morel, Patrick, 77590, CHARTRETTES (FR); Riou, Georges, 77000, MELUN (FR)
(74) Mandataire: David, Daniel

(56) Documents cités:
- EP-A- 1 548 229
- EP-A- 1 714 871
- WO-A-2005/057001
- GB-A- 2 254 892
- GB-A- 2 361 035
- US-A- 4 240 250
- US-A- 5 356 264
- US-A1- 2006 169 532

## Description

La présente invention concerne le domaine des turboréacteurs à double flux et vise l'atténuation du bruit émis par le moteur, en particulier du bruit émis par la soufflante.

Un turboréacteur à double flux pour la propulsion d'avions de transport comprend une soufflante généralement amont délivrant un flux d'air annulaire avec une partie annulaire centrale, primaire, qui alimente le moteur entraînant la soufflante et une partie annulaire extérieure, secondaire, qui est éjectée dans l'atmosphère tout en fournissant une fraction importante de la poussée. La soufflante est contenue dans un carter délimitant le flux secondaire. Un élément structural du moteur désigné carter intermédiaire comprend un moyeu supportant les arbres reliant les différents rotors, un carter annulaire extérieur et des bras de liaison radiaux entre les deux. Les bras radiaux transmettent une partie des efforts entre le moteur et son support. Actuellement sur les moteurs une couronne d'ailettes fixes est disposée le plus souvent, entre le rotor de la soufflante et les bras du carter intermédiaire, pour redresser le flux secondaire dans l'axe du moteur. Ces ailettes sont désignées généralement par le terme OGV qui est l'acronyme de Outlet Guide Vane.

On trouve aussi, depuis peu, des moteurs, dont les bras de liaison assurent une fonction de redresseur du flux en aval de la soufflante. Cette fonction de redresseur de flux implique un nombre de bras et d'OGV important, de l'ordre de 30 à 50 sur un moteur à double flux dont le nombre d'aubes sur le rotor de soufflante est de 18 à 24, et par conséquent une épaisseur maximale de ceux-ci relativement faible. Elle est dans cet exemple de 10 à 15 mm pour les OGV. Elle peut être supérieure à 100mm pour certains bras. Cette disposition, en permettant en outre d'éloigner les aubes de redresseur par rapport à celles du rotor améliorant ainsi le rendement fan de l'ordre de 0,3 à 0,4 point pour des moteurs à taux de dilution élevés , a un effet favorable sur l'amplitude des mécanismes d'interaction entre écoulement et grille d'aubes fixes. C'est sur cette grille que du bruit est généré par l'impact des fluctuations de vitesse et de pression sur aubes qui ont pour origine l'écoulement instationnaire. Il est important de préciser également, que le choix du nombre d'aubes du redresseur est déjà guidé par des critères acoustiques appliqués lors de la conception pour réduire le bruit à la source. Ce critère se traduit par un nombre d'aubes au moins 2 fois plus important sur le stator que sur le rotor pour assurer la coupure des modes acoustiques générés par l'interaction des sillages issus du rotor sur le stator à la fréquence de passage des aubes mobiles. Cette recommandation s'applique assez systématiquement lors de la conception de toute soufflante.

On connait par ailleurs des moteurs, tels que décrits dans les demandes de brevet publiées sous les numéros GB2361035, WO2005/057001 et EP1548229 qui présentent des dispositifs de réduction du bruit émis, par création de résonateurs de Helmholtz.

La demanderesse s'est fixé comme objectif d'améliorer la réduction du bruit émis par la soufflante dans le cadre de cette dernière configuration. La demanderesse s'est fixé notamment comme objectif la mise au point d'un dispositif capable de réduire le bruit de soufflante, tout en préservant les performances aérodynamiques et la tenue mécanique sans augmenter la masse.

Elle y parvient conformément à l'invention avec un ensemble constitué d'une nacelle enveloppant un carter de soufflante d'un turboréacteur et d'un carter intermédiaire dudit turboréacteur, ledit carter intermédiaire comprenant au moins un bras de liaison, structural ou non de carter de soufflante ledit bras formant également redresseur de flux en aval du rotor de soufflante, et comprenant une cavité fermée et des perforations sur au moins l'une de ses faces de manière à constituer un résonateur de Helmholtz, caractérisé par le fait que la cavité est prolongée par un élément creux en forme de poche logé dans la nacelle enveloppant le carter de soufflante.

Elle y parvient également avec un ensemble constitué d'un carter intermédiaire d'un turboréacteur et d'un carter du flux primaire dudit turboréacteur, la même cavité étant prolongée par un élément creux logé cette fois-ci à l'intérieur du carter du corps du flux primaire.

On ajuste ainsi le volume de la cavité au moyen d'une simple poche ou autre élément creux qui la prolonge en dehors de la veine du flux secondaire au-delà du carter de soufflante.

Grâce à l'invention, en traitant acoustiquement au moins une partie des bras, structuraux ou non, tels que ceux faisant partie du carter intermédiaire, on parvient à tenir un objectif de réduction de bruit significatif.

En effet la solution de l'invention permet une réduction du bruit moteur aux moyennes fréquences de 2000 à 3000Hz avec des performances acoustiques significatives estimées entre 0,5 EPNdB et 1 EPNdB de marge cumulée sur les trois points de contrôle de certification acoustique. Par sa disposition radiale dans la veine d'écoulement cette solution permet notamment de «piéger» une partie de l'énergie acoustique qui ne peut être dissipée par les traitements acoustiques pariétaux.

La solution de l'invention a également comme avantage d'avoir un impact négligeable sur les performances aérodynamiques de la soufflante à condition de prendre certaines précautions lors de sa mise oeuvre. Ainsi pour limiter les pertes par frottement on localisera les perforations sur l'intrados des bras, la où les vitesses de l'écoulement sont moindres, tout en minimisant les diamètres d'orifices de celles-ci d<1mm. Il est aussi très important d'éviter toute recirculation d'air à l'intérieur des bras ce qui conduit à implanter les zones perforées en prenant en compte les profils de la pression statique sur la hauteur des bras.

La solution de l'invention a encore comme avantage d'entraîner une très faible pénalité en masse. La masse est proche de celle d'un carter avec des bras creux non traités.

La solution de l'invention a encore comme avantage de conserver l'architecture mécanique classique de la pièce. Celle-ci est peu différente de la réalisation de bras de production, évidés, non traités acoustiquement. Cet agencement implique également un coût de fabrication et d'industrialisation envisageable pour une production en série.

En ajoutant une fonction acoustique aux fonctions, l'une de liaison et éventuellement structurale, l'autre aérodynamique, déjà assurées par un redresseur intégré équipant le carter des soufflantes modernes, il convient de réaliser un compromis entre l'efficacité acoustique au vu du faible volume disponible à l'intérieur des bras, la masse et la simplicité de fabrication.

Conformément à une autre caractéristique, les perforations sont ménagées sur la face intrados du bras de liaison et plus particulièrement les perforations sont ménagées sur la partie supérieure du bras où l'intensité sonore est maximale.

Avantageusement les perforations ont un diamètre inférieur à 1 mm, notamment les perforations ont un diamètre inférieur à 0,5 mm.

Conformément à une autre caractéristique le taux d'ouverture pour les zones perforées est compris entre 5 et 10%.

Lorsque le bras comprend au moins un élément de renfort interne, tel que, par exemple, un raidisseur en forme de profilé, ce dernier est fortement ajouré.

On décrit maintenant un mode réalisation non limitatif de l'invention en référence aux dessins sur lesquels,
la figure 1 montre en demi coupe axiale une vue partielle de la partie amont d'un turboréacteur à soufflante avant,
la figure 2 montre un bras de liaison du carter intermédiaire du turboréacteur de la figure 1, vu en coupe selon II-II perpendiculaire à son axe radial.

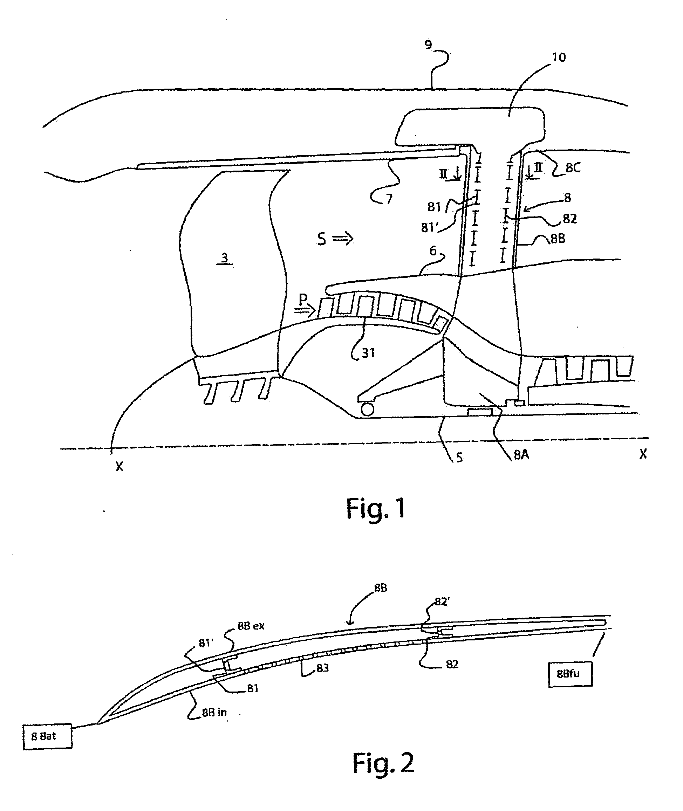

Un turboréacteur 1 à double flux et à soufflante avant comprend un rotor de soufflante 3 monté en extrémité avant d'un arbre 5 qui est relié vers l'aval à une turbine, non représentée sur la figure. La soufflante aspire l'air et le comprime en un double flux annulaire, à savoir un flux primaire P du côté l'axe XX du moteur et un flux secondaire S qui lui est concentrique. Le flux primaire P passe dans des étages successifs de compression dont on voit les premiers 31 et 32 seulement sur la figure 1. Le flux primaire P est ainsi comprimé et guidé jusqu'à la chambre de combustion. Les gaz résultant de la combustion sont dirigés vers les rotors de turbine où l'énergie est récupérée. La turbine basse pression est reliée au rotor de la soufflante 3 par l'arbre BP 5 dont on voit l'extrémité amont sur la figure. Le flux secondaire S est canalisé vers l'aval entre le carénage 6 du corps du flux primaire et le carter extérieur 7 de soufflante, et traverse la roue formée par le carter intermédiaire 8. Ce carter intermédiaire 8 comprend un moyeu 8A traversé par l'arbre BP 5 du moteur et qui supporte les paliers avant des arbres HP et BP. Une virole extérieure 8C supporte la virole du carter de soufflante 7. Des bras radiaux 8B dits de liaison relient le moyeu 8A à la virole extérieure 8C. Cet ensemble forme le carter intermédiaire 8 et a une fonction structurale dans la mesure où les efforts sont transmis par son intermédiaire ; en particulier les moyens de fixation du moteur à la structure de l'avion dans la partie avant sont solidaires du carter intermédiaire 8.

Celui-ci peut soit être constitué d'une seule pièce monobloc, soit d'un assemblage soudé ou boulonné de pièces primaires. Les bras radiaux 8B ont, dans la configuration de l'invention, pour certains à la fois une fonction structurale et une fonction aérodynamique de redresseur de flux pour d'autres une seule fonction aérodynamique. Les bras ont un profil aérodynamique et sont en nombre suffisant pour redresser le flux secondaire d'air provenant du rotor de soufflante 3 dans l'axe du moteur.

Selon l'agencement sur l'avion, le flux secondaire S est soit éjecté directement dans l'atmosphère en aval du carter intermédiaire en un flux séparé du flux primaire soit mélangé en aval avec les gaz du flux primaire pour former un flux mélangé.

La présente invention s'applique indifféremment aux deux variantes possibles d'agencement, flux primaire et secondaire séparés ou les deux flux mélangés. Par rapport aux moteurs de la génération précédente, les bras radiaux assurent les deux fonctions rapportées ci-dessus. Cette disposition est en soi connue. Il est également connu que la disposition des bras radiaux associée à la fonction de redresseur a un effet favorable sur la génération du bruit de la soufflante par éloignement du redresseur.

Il est également connu par ailleurs de traiter acoustiquement les parois du canal annulaire de soufflante par la mise en oeuvre d'éléments amortisseurs de bruit. Selon une méthode connue, l'amortissement acoustique est réalisé au moyen de résonateurs d'Helmholtz à n degrés de liberté (n=1 ou 2 en général).

On rappelle que les résonateurs d'Helmholtz sont constitués d'une couche non poreuse pleine, d'un ou plusieurs cloisonnements perpendiculaires à celle-ci, souvent réalisés par une structure en forme de nid d'abeille, et d'une ou plusieurs couches poreuses; l'ensemble constitue ainsi une ou des cavités. La couche pleine permet d'imposer la condition de vitesse acoustique nulle en paroi. Les cloisonnements guident l'onde acoustique qui se propage sous la forme d'une onde plane compte tenu du rapport important de la longueur d'onde sur la dimension transversale de la cavité.

Les résonateurs d'Helmholtz constitués à base de panneaux sandwich sont couramment utilisés dans les conduits de turboréacteurs à cause de leurs excellentes propriétés mécaniques et acoustiques.

On traite acoustiquement une partie au moins des bras radiaux 8B. Il est à noter que les bras radiaux qui assurent le passage des servitudes ne sont de préférence pas concernés par le traitement acoustique en raison du manque d'espace libre qu'ils laissent disponibles.

Les autres bras sont généralement creux. On met à profit le volume d'air disponible à l'intérieur des bras pour former des résonateurs d'Helmholtz. La figure 2 représente une coupe perpendiculaire à l'axe radial d'un bras de liaison radial 8B ainsi traité. Ce bras a une forme aérodynamique avec une face intrados 8Bin et une face extrados 8Bex qui s'étendent entre un bord d'attaque 8Bat et un bord de fuite 8Bfu. Des raidisseurs 81 et 82 en forme de profilés sont dans cet exemple disposés entre les deux faces 8Bin et 8Bex pour consolider la structure du bras 8B. Toutefois les bras peuvent ne pas en comporter. Ces raidisseurs sont ajourés avec des perçages 81' et 82'. Une des faces, 8Bin ou 8Bex, ou les deux sont pourvues de perforations 83. Les raidisseurs sont visibles aussi sur la figure 1 qui montre un bras en coupe axiale

Le volume clos, ménagé entre les deux faces, associé aux perforations forme un résonateur d'Helmholtz. On ajuste la ou les fréquences d'accord des résonateurs ainsi formés pour dissiper l'énergie sonore par viscothermie à travers les perforations.

Les perforations 83 sont ménagées localement de préférence sur la partie supérieure de l'intrados afin d'éviter les pertes aérodynamiques par frottement et re-circulation d'air en interne bras.

Toutefois conformément à un mode de réalisation particulier, on ménage des perforations sur l'extrados sur une partie des résonateurs dans le but d'amortir les fluctuations de pression associées aux sillages et qui sont particulièrement importantes dans la zone au voisinage du bord d'attaque. On sait que ce phénomène est à l'origine d'une partie importante du bruit de soufflante. Dans ce cas, la configuration adoptée est un compromis entre les gains acoustiques et les pertes aérodynamiques engendrées.

Les perforations 83 ont un diamètre maximum de 1 mm et de préférence inférieur à 0.5mm et sont avantageusement circulaires. Au delà de 1 mm les pertes aérodynamiques deviennent non négligeables. Mises en relation avec la cavité d'air formée à l'intérieur du bras, elles constituent un résonateur d'Helmholtz où la dissipation sonore s'effectue grâce aux pertes visco-thermiques générées à leur niveau.

Dans ce système dissipatif avec comme contrainte un volume de cavité figé, l'accord en fréquence est principalement assuré en jouant sur l'importance de la (ou des) zone(s) perforée(s), zone qui fait office de « col » du résonateur.

Pour absorber le bruit dans la gamme de fréquences visée de 2000 à 3000Hz, d'une part la moitié environ de la surface de l'intrados est perforée et d'autre part les raidisseurs internes sont ajourés pour mettre en résonance l'ensemble du volume d'air contenu dans un bras. En terme de porosité, le taux d'ouverture ou taux de perforations dans la (ou les) zone(s) perforée(s) est fixé de préférence à une valeur comprise entre 5 et 10%.

Pour une solution avec répartition des perforations 83 sur extrados et intrados, la zone perforée représente environ le quart de la surface mouillée de l'aube. Les perforations sont situées de préférence sur la moitié supérieure, du côté de la virole 8C.

On obtient un gain sur les niveaux acoustiques sans pénalité sur les performances moteur avec un coût de mise en oeuvre raisonnable tant en industrialisation qu'en fabrication, le bilan masse n'étant pratiquement pas affecté.

Parmi les matériaux et procédés d'obtention de ces bras radiaux, redresseurs, un certain nombre de solutions industrielles sont possibles telles que déjà appliquées sur les pièces similaires. Il s'agit de soit de solutions d'assemblage mécano-soudé, mécano brasé, ou boulonné de pièces primaires métalliques, soit de solutions d'obtention de la pièce monobloc ou en fonderie ou en forge avec insert.

Une autre solution comprend les matériaux composites à matrice organique ou à matrice métallique.

Les solutions d'obtention à matrice organique sont réalisées à partir de fibres de carbone et/ou verre et de résine époxy. La pièce est obtenue soit à partir d'un empilage de tissus 2D pré-imprégnés, soit à partir d'un empilage de tissus 2D injecté RTM, soit à partir de préformes tissées ou tressées injectées RTM.

On joue conformément à une caractéristique de l'invention sur le volume de la cavité du résonateur en adaptant une cavité supplémentaire comme cela est représenté sur la figure 1 sous la forme d'une poche 10 que l'on voit en coupe. Cette cavité supplémentaire constitue un prolongement de la cavité définie entre les parois 8Bin et 8Bex. La poche 10 est disposée dans la nacelle du moteur au-delà du carter de soufflante. Cette poche est ouverte sur la cavité du bras radial 8. De cette façon, il est possible, en choisissant un volume approprié de la poche, d'accorder aisément le résonateur d'Helmholtz aux fréquences requises pour assurer l'amortissement souhaité.

Conformément à une autre caractéristique, la cavité est prolongée par un élément creux logé à l'intérieur du carter 6 du corps du flux primaire formant une poche ouverte sur la cavité du bras radial 8. le volume peut être obtenu par l'un ou l'autre des deux solutions ou bien par une combinaison des deux.

## Revendications

1. Ensemble constitué d'une nacelle enveloppant un carter de soufflante (7) d'un turboréacteur et d'un carter intermédiaire (8) dudit turboréacteur, ledit carter intermédiaire comprenant au moins un bras de liaison (8B), structural ou non, de carter de soufflante, ledit bras (8B) formant également redresseur de flux en aval du rotor de soufflante (3), et comprenant une cavité fermée et des perforations (83) sur l'une des faces (8Bin, 8Bex) de manière à constituer un résonateur de Helmholtz pour former amortisseur acoustique, **caractérisé par le fait que** la cavité est prolongée par un élément (10) creux en forme de poche logé dans la nacelle enveloppant le carter de soufflante.

2. Ensemble constitué d'un carter intermédiaire (8) d'un turboréacteur et d'un carter (6) du flux primaire dudit turboréacteur, ledit carter intermédiaire comprenant au moins un bras de liaison (8B), structural ou non, de carter de soufflante, ledit bras (8B) formant également redresseur de flux en aval du rotor de soufflante (3), et comprenant une cavité fermée et des perforations (83) sur l'une des faces (8Bin, 8Bex) de manière à constituer un résonateur de Helmholtz pour former amortisseur acoustique, **caractérisé par le fait que** la cavité est prolongée par un élément creux logé à l'intérieur du carter (6) du corps du flux primaire.

3. Ensemble selon la revendication 1 ou 2 dans lequel les perforations (83) sont ménagées sur la face intrados (8Bin) du bras (8B).

4. Ensemble selon l'une des revendications 1 et 2 dans lequel les perforations (83) sont ménagées sur la partie supérieure du bras.

5. Ensemble selon l'une des revendications 1 à 3 dans lequel les perforations (83) ont un diamètre inférieur à 1 mm.

6. Ensemble selon la revendication précédente dans lequel les perforations (83) ont un diamètre inférieur à 0,5 mm.

7. Ensemble selon l'une des revendications précédentes dans lequel le taux d'ouverture dans les zones perforées (83) est compris entre 5 et 10% de la surface totale du bras.

8. Ensemble selon l'une des revendications précédentes dans lequel le bras de liaison (8B) comprend au moins un élément de renfort interne (81, 82), ce dernier étant ajouré (81', 82').

9. Turboréacteur comportant une nacelle et un carter intermédiaire (7) selon l'une des revendications 1 ou 3 à 7 en dépendance de 1.

10. Turboréacteur comportant un carter intermédiaire (7) et un carter (6) du flux primaire selon l'une des revendications 2 ou 3 à 7 en dépendance de 2.

## Claims

1. Assembly consisting of a nacelle surrounding a fan casing (7) of a turbojet engine and comprising an intermediate casing (8) of said turbojet engine, said intermediate casing comprising at least one structural or non-structural connecting arm (8B) of the fan casing, said arm (8B) also acting as a flow straightener downstream of the fan rotor (3), and comprising a closed cavity and perforations (83) on one of the faces (8Bin, 8Bex) so as to form a Helmholtz resonator to act as an acoustic attenuator, **characterised in that** the cavity is extended by a hollow element (10) in the form of a pocket housed in the nacelle that surrounds the fan casing.

2. Assembly consisting of an intermediate casing (8) of a turbojet engine and a primary flow casing (6) of said turbojet engine, said intermediate casing comprising at least one structural or non-structural connecting arm (8B) of the fan casing, said arm (8B) also acting as a flow straightener downstream of the fan rotor (3), and comprising a closed cavity and perforations (83) on one of the faces (8Bin, 8Bex) so as to form a Helmholtz resonator to act as an acoustic attenuator, **characterised in that** the cavity is extended by a hollow element housed inside the casing (6) of the body of the primary flow.

3. Assembly according to either claim 1 or claim 2, in which the perforations (83) are formed on the lower face (8Bin) of the arm (8B).

4. Assembly according to either of claims 1 and 2, in which the perforations (83) are formed on the upper part of the arm.

5. Assembly according to any one of claims 1 to 3, in which the perforations (83) have a diameter of less than 1 mm.

6. Assembly according to the preceding claim, in which the perforations (83) have a diameter of less than 0.5 mm.

7. Assembly according to any one of the preceding claims, in which the degree of perforation in the perforated regions (83) represents between 5 and 10% of the total area of the arm.

8. Assembly according to any one of the preceding claims, in which the connecting arm (8B) comprises at least one internal reinforcing element (81, 82), said reinforcing element being perforated (81', 82').

9. Turbojet engine comprising a nacelle and an intermediate casing (7) according to any one of claims 1 or 3 to 7 when dependent on claim 1.

10. Turbojet engine comprising an intermediate casing (7) and a primary flow casing (6) according to any one of claims 2 or 3 to 7 when dependent on claim 2.

## Patentansprüche

1. Einheit, gebildet aus einer Gondel, die ein Gebläsegehäuse (7) eines Strahltriebwerks umgibt, und aus einem Zwischengehäuse (8) des Strahltriebwerks, wobei das Zwischengehäuse mindestens einen Verbindungsarm (8B), konstruktiv oder nicht, des Gebläsegehäuses umfasst, wobei der Arm (8B) auch ein Leitwerk nach dem Gebläselaufrad (3) bildet und einen geschlossenen Hohlraum und Löcher (83) an einer der Seiten (8Bin, 8Bex) umfasst, sodass er einen Helmholtz-Resonator darstellt, um einen Schalldämpfer zu bilden, **dadurch gekennzeichnet, dass** der Hohlraum mit einem hohlen Element (19) in Form einer Tasche verlängert ist, das in der Gondel, die das Gebläsegehäuse umgibt, untergebracht ist.

2. Einheit, gebildet aus einem Zwischengehäuse (8) eines Strahltriebwerks und aus einem Gehäuse (6) des Primärstroms des Strahltriebwerks, wobei das Zwischengehäuse mindestens einen Verbindungsarm (8B), konstruktiv oder nicht, des Gebläsegehäuses umfasst, wobei der Arm (8B) auch ein Leitwerk nach dem Gebläselaufrad (3) bildet und einen geschlossenen Hohlraum und Löcher (83) an einer der Seiten (8Bin, 8Bex) umfasst, sodass er einen Helmholtz-Resonator darstellt, um einen Schalldämpfer zu bilden, **dadurch gekennzeichnet, dass** der Hohlraum mit einem hohlen Element verlängert ist, das im Inneren des Gehäuses (6) des Körpers des Primärstroms untergebracht ist.

3. Einheit nach Anspruch 1 oder 2, in der die Löcher (83) auf der Unterseite (8Bin) des Arms (8B) vorgesehen sind.

4. Einheit nach einem der Ansprüche 1 und 2, in der die Löcher (83) auf dem oberen Arm vorgesehen sind.

5. Einheit nach einem der Ansprüche 1 bis 3, in der die Löcher (83) einen Durchmesser von unter 1 mm aufweisen.

6. Einheit nach dem vorhergehenden Anspruch, in der die Löcher (83) einen Durchmesser von unter 0,5 mm aufweisen.

7. Einheit nach einem der vorhergehenden Ansprüche, in der der Öffnungsgrad in den mit Löchern versehenen Bereichen (83) zwischen 5 und 10% der Gesamtfläche des Arms beträgt.

8. Einheit nach einem der vorhergehenden Ansprüche, in der der Verbindungsarm (8B) mindestens ein inneres Verstärkungselement (81, 82) umfasst, wobei letzteres durchbrochen (81', 82') ist.

9. Strahltriebwerk, das eine Gondel und ein Zwischengehäuse (7) nach einem der Ansprüche 1 oder 3 bis 7 in Abhängigkeit von 1 aufweist.

10. Strahltriebwerk, das ein Zwischengehäuse (7) und ein Gehäuse (6) des Primärstroms nach einem der Ansprüche 2 oder 3 bis 7 in Abhängigkeit von 2 aufweist.
